# FASCICULE DE BREVET EUROPEEN

(11) **EP 1 619 426 B1**
(45) Date de publication et mention de la délivrance du brevet: **21.05.2008**
(21) Numéro de dépôt: 05015509.2
(22) Date de dépôt: 18.07.2005
(51) Int. Cl.: F16J 15/08

(54) **Joint d'étanchéité comprenant une âme flexible et au moins une barrière d'étanchéité en matériau souple**
Dichtungsanordnung mit einer flexiblen Seele und mindestens eine Dichtungsbarriere aus weichem Material
Sealing device with a flexible core and at least one sealing barrier made of soft material

(30) Priorité: 19.07.2004 FR 0451573
(43) Date de publication de la demande: 25.01.2006
(73) Titulaire: Carl Freudenberg KG, 69469 Weinheim (DE)
(72) Inventeur: Bolé, Ronan, 87000 Limoges (FR)

(56) Documents cités:
- EP-A- 1 350 992
- US-A- 3 930 656
- US-A- 5 700 015

## Description

La présente invention se rapporte à un joint d'étanchéité comprenant une âme flexible et au moins une barrière d'étanchéité en matériau souple, notamment en élastomère.

Selon un mode de réalisation connu, décrit notamment dans le document FR-2.768.211, un joint d'étanchéité peut comprendre une âme métallique revêtue sur chacune de ses faces d'une couche d'élastomère.

Selon ce document, l'âme comprend des crevés pour obtenir un meilleur accrochage des couches d'élastomère sur l'âme. Ces crevés assurent également la fonction de butée de serrage et ont une hauteur égale à la couche d'élastomère.

Un autre joint, selon le préambule de la revendication indépendante 1, est divulgué dans le document EP-A-1350992.

Par conséquent pour assurer l'étanchéité, les couches d'élastomère comprennent des filets en saillie susceptibles d'être comprimés de manière à former des barrières d'étanchéité.

Ce type de joint ne donne pas pleinement satisfaction et n'assure pas une fonction d'étanchéité optimale en raison d'un taux de compression non contrôlé du revêtement élastomère, notamment au niveau des filets, relativement faible. Cet inconvénient est d'autant plus important que la pression des fluides à étancher à l'intérieur des moteurs actuels est de plus en plus élevée.

Selon une autre variante, un joint d'étanchéité peut comprendre une âme métallique revêtue sur au moins une de ses faces d'une couche d'élastomère avec des filets en saillie susceptibles d'être comprimés et de former des barrières d'étanehéité.

Cette variante ne donne pas pleinement satisfaction car la mise en place du joint nécessite de contrôler les efforts de serrage afin que le revêtement élastomère ne soit pas excessivement comprimé et perde ses propriétés élastiques.

Aussi, la présente invention vise à pallier les inconvénients de l'art antérieur en proposant un nouveau joint d'étanchéité de conception simple, susceptible d'assurer une excellente étanchéité même à des pressions élevées et de conserver ses capacités à étancher dans le temps.

A cet effet, l'invention a pour objet un joint d'étanchéité selon la revendication 1.

D'autres caractéristiques et avantages ressortiront de la description qui va suivre de l'invention, description donnée à titre d'exemple uniquement, en regard des dessins annexés sur lesquels:
- la figure 1 est une coupe d'un joint non comprimé selon une variante simplifiée de l'invention,
- la figure 2 est une coupe du joint de la figure 1 interposé entre deux éléments à étancher,
- la figure 3 est une coupe d'un joint non comprimé selon une autre variante,
- la figure 4 est une coupe d'un joint non comprimé selon une variante améliorée, et
- la figure 5 est une vue de dessus d'un joint selon l'invention appliqué à un orifice.

Sur les différentes figures, on a représenté en 10 un joint d'étanchéité susceptible d'être disposé entre deux éléments 12, 12' à étancher, ledit joint comprenant au moins une ouverture 14 susceptible de coopérer avec des conduits ou ouvertures ménagés au niveau des éléments à étancher. Ainsi, le joint doit assurer une étanchéité entre les différentes ouvertures 14 et entre lesdites ouvertures et l'extérieur. Ce joint d'étanchéité peut être utilisé dans de nombreuses applications par exemple en tant que joint de culasse, joint de palier, joints pour carter de distribution ou pompe à eau, ...

Le joint 10 comprend au moins une barrière d'étanchéité 16, continue ou discontinue, disposée de manière adéquate au niveau de la surface du joint pour limiter la propagation d'un fluide. A titre d'exemple, la barrière d'étanchéité peut être prévue à une faible distance du bord périphérique du joint ou autour des ouvertures 14.

Selon l'invention, le joint 10 comprend une âme 18 d'épaisseur I avec une butée 20 d'épaisseur h supérieure à I ainsi qu'une nervure 22 prévue au niveau de la barrière d'étanchéité 16. L'âme est réalisée en un matériau flexible susceptible de se déformer au moins au niveau de la nervure 22 lorsqu'elle est soumise à une contrainte. Avantageusement, la déformation de l'âme est de type élastique afin que ladite âme revienne sensiblement à sa forme initiale lorsqu'elle n'est plus soumise à une contrainte.

La butée 20 peut être obtenue de différentes manières par exemple par ajout de cale, par déformation de la tôle, notamment par plicige, par découpe ou autre. La butée 20 a pour fonction de limiter l'écrasement du joint en imposant une valeur limite inférieure à l'écartement entre les éléments à étancher.

Cette butée 20 comprend une première surface d'appui contre laquelle peut prendre appui un des éléments à étancher, susceptible de définir un premier plan de butée 26 et une seconde surface d'appui, à l'opposé de la première, contre laquelle peut prendre appui l'autre élément à étancher, susceptible de définir un second plan d'appui 28.

Selon un mode de réalisation préféré, l'âme est réalisée à partir d'une tôle pliée pour obtenir la butée 20 et nervurée pour obtenir la nervure 22.

Selon un autre mode de réalisation, la butée 20 est de type monobloc et obtenue par exemple par matriçage et non par pliage.

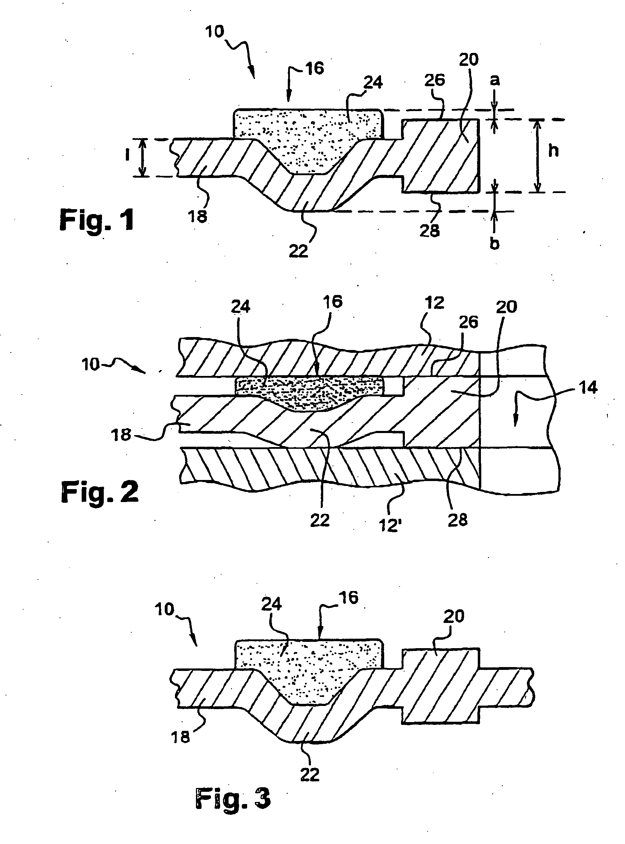

Cette butée 20 peut être disposée au niveau du bord périphérique du joint ou de l'ouverture 14, comme illustré sur les figures 1, 2, 4 et 5, ou non, comme illustré sur la figure 3.

De préférence, la butée 20 est sensiblement centrée par rapport à l'âme 18, à savoir une partie de la butée 20 vient en saillie par rapport à une première surface de l'âme 18 et une autre partie de la butée 20 vient en saillie par rapport à la seconde surface de l'âme 18.

Selon l'invention, la barrière d'étanchéité 16 est constituée d'un élément 24 en matériau souple, notamment en élastomère, disposé au moins au niveau du creux de la nervure 22, ledit élément venant en saillie par rapport au premier plan de butée 26, la partie en saillie de la nervure 22 venant en saillie par rapport au second plan de butée 28.

Avantageusement, l'élément 24 n'est prévu qu'au niveau de la surface de l'âme comportant le creux de la nervure et n'est pas prévu au niveau de la surface convexe de la nervure. Cet agencement contribue à réduire les coûts de fabrication.

L'élasticité de l'élément 24 est de préférence différente de l'élasticité de la nervure 22. De préférence, l'élasticité de l'élément 24 est inférieure à celle de la nervure.

Selon un mode de réalisation, l'élément 24 est prévu de part et d'autre de la zone en creux de la nervure comme illustré sur les différentes nervures. De préférence, la surface dite de contact de l'élément 24, susceptible d'être en contact avec la surface à étancher, est sensiblement plane et s'étend au-delà de la zone en creux de la nervure, de préférence de part et d'autre de ladite zone. Avantageusement, la totalité de la surface de contact de l'élément 24 vient saillie par rapport à la butée. Ainsi, on obtient une surface de contact importante, ce qui contribue à améliorer l'étanchéité.

Comme illustré par la figure 2, lorsque le joint est interposé entre deux éléments 12, 12' à étancher, la partie en saillie par rapport au plan d'appui 26 de l'élément 24 en matériau souple est mise en compression. La compression de l'élément 24 est renforcée en raison de la déformation de la partie en saillie de la nervure 22.

On note que la butée 20 limite l'écrasement de l'élément 24 en matériau souple et réduit les risques de détérioration de ce dernier, notamment de ses capacités élastiques dans le temps. En effet, la butée 20 est orientée de manière à venir en saillie par rapport à la surface de l'âme 18 au niveau de la quelle est prévu le creux de la nervure 22, sa hauteur par rapport à la surface de l'âme 18 étant inférieure à celle de l'élément 24 en matériau souple.

A titre d'exemple, l'âme est réalisée à partir d'une tôle métallique ayant des caractéristiques élastiques fonction de la force d'étanchéité requise. L'âme 18 pourra être en acier doux (traités ou non) ou dans un acier inoxydable. A titre indicatif, la résistance mécanique de l'âme sera comprise dans la plage de 500 à 1300 Mpa.

Dans les cas d'utilisation en milieu particulièrement agressif, l'âme sera avantageusement protégée par des revêtements anti-corrosion, tels qu'à base de zinc par exemple.

Le matériau souple doit de préférence avoir une bonne tenue à la température, une bonne résistance aux liquides et aux huiles de refroidissement et une déformation rémanente à la compression inférieure à 50%. A titre d'exemple, on pourra utiliser des élastomères des familles NBR, SBR, EPDM, MVQ, FPM.

L'épaisseur I de l'âme varie de l'ordre de 0,1 à 1 mm.

L'épaisseur h de la butée varie de l'ordre de 0,15 à 1,2 mm.

La différence de hauteur a entre l'élément en matériau souple et le plan d'appui 26 ne sera pas inférieure à 20% de la hauteur h de la butée 20.

La différence de hauteur b entre la partie en saillie de la nervure et le plan d'appui 28 sera de l'ordre de 10 à 50 % de la hauteur de la nervure.

D'une façon générale, les différences de hauteur a et/ou b seront déterminées en fonction de la raideur des éléments et de la pression des fluides à étancher.

Selon un mode de réalisation préféré, une tôle est pliée et nervurée de manière adéquate pour former l'âme 18. Ensuite, on injecte de l'élastomère liquide dans un moule aux formes des barrières d'étanchéité dans lequel l'âme 18 est disposée au moins en partie. Après vulcanisation de l'élastomère, on découpe l'âme de manière à former les ouvertures et les orifices adéquats ainsi que le pourtour du joint.

Le fait de déposer l'élastomère après la mise en forme de l'âme limite les risques de détérioration du revêtement en élastomère.

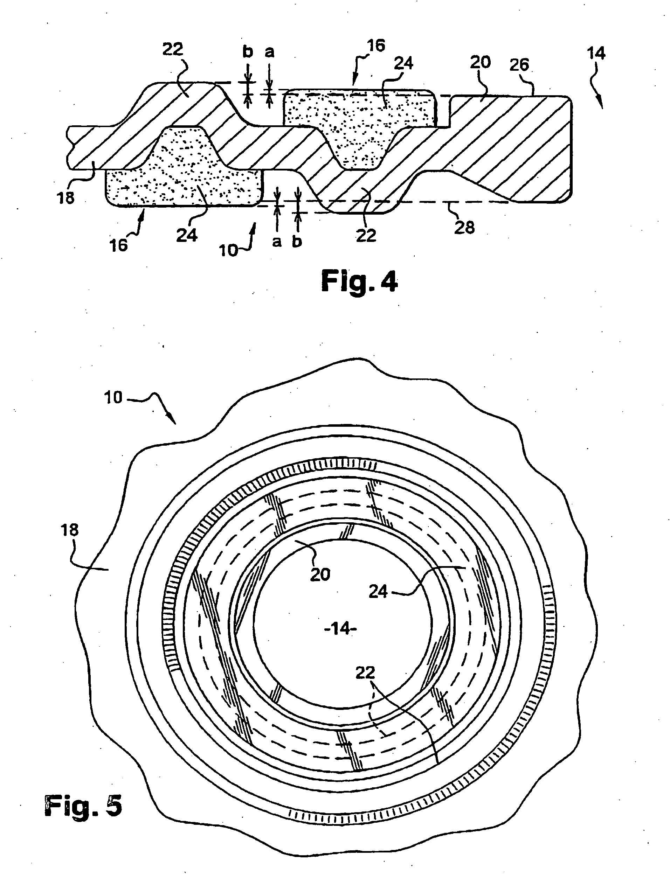

Avantageusement, des barrières d'étanchéité sont prévues sur chacune des faces du joint, les parties en saillie des nervures étant orientées de manière opposée comme illustré sur les figures 4 et 5.

Dans ce cas, les barrières d'étanchéité des faces supérieure et inférieure ne sont pas alignées. Ainsi, la force d'étanchéité du joint résulte de la combinaison de l'élasticité de l'âme et de l'élastomère,

Selon une autre caractéristique, le taux de compression de l'élément en matériau souple peut varier sur sa longueur en faisant varier la valeur de la hauteur a et/ou la valeur de la hauteur b et/ou la géométrie de la nervure pour compenser les efforts de serrage qui peuvent varier au niveau de la surface de contact du joint.

## Revendications

1. Joint d'étanchéité comprenant une âme (18) d'épaisseur 1 sur laquelle est rapportée au moins une barrière d'étanchéité (16), l'âme (18) comprenant une butée. (20) d'épaisseur h supérieure à l'ainsi qu'une nervure (22) prévue au niveau de la barrière d'étanchéité (16) et la barrière d'étanchéité (16) cet constituée d'un élément (24) en matériau souple, notamment en élastomère, disposé au moins au niveau du creux de la nervure (22), ledit élément venant en saillie par rapport au premier plan de butée (26) défini par une première surface d'appui de la butée (20), la partie en saillie de la nervure (22) venant un saillie par au second plan de butée (28) défini par la seconde surface d'appui de la butée (20), **caractérisé en ce que** le premier plan de butée (26) vient en saillie par rapport à la surface de l'âme (18) au niveau de laquelle est ménagé le creux de la nervure (22).

2. Joint d'étanchéité selon la revendication 1, **caractérisé en ce que** des barrières d'étanchéité (16) sont prévues sur chacune des faces du joint, les parties en saillie des nervures étant orientées de manière opposée.

3. Joint d'étanchéité selon la revendication 1 ou 2, **caractérisé en ce que** la différence de hauteur (a) entre la partie en saillie de l'élément en matériau souple et le premier plan de butée (26) est Supérieure ou égale à 20% de la hauteur h de la butée (20).

4. Joint d'étanchéité selon l'une quelconque des revendications 1 à 3, **caractérisé en ce que** la différence de hauteur (b) entre la partie en saillie de la nervure et le second plan de butée (28) est de l'ordre de 10 à 50% de la hauteur de la nervure.

## Claims

1. Seal comprising a core (18) of thickness 1 to which at least one sealing barrier (16) is attached, the core (18) having a stop (20) of thickness h greater than 1 and a rib (22) provided level with the sealing barrier (16) and the sealing barrier (16) consisting of an element (24) made of flexible material, especially an elastomer, placed at least in the hollow of the rib (22), said element protruding beyond the first stop plane (26) defined by a first bearing surface of the stop (20), the protruding part of the rib (22) protruding beyond the second stop plane (28) defined by the second bearing surface of the stop (20), **characterized in that** the first stop plane (26) protrudes beyond the surface of the core (18) in which the hollow of the rib (22) is provided.

2. Seal according to Claim 1, **characterized in that** sealing barriers (16) are provided on each of the faces of the seal, the protruding parts of the ribs being oppositely oriented.

3. Seal according to Claim 1 or 2, **characterized in that** the difference in height (a) between the protruding part of the element made of flexible material and the first stop plane (26) is greater than or equal to 20% of the height h of the stop (20) .

4. Seal according to any one of Claims 1 to 3, **characterized in that** the difference in height (b) between the protruding part of the rib and the second stop plane (28) is of the order of 10 to 50% of the height of the rib.

## Patentansprüche

1. Dichtungsanordnung, umfassend eine Seele (18) mit einer Dicke 1, auf die mindestens eine Dichtungsbarriere (16) aufgesetzt ist, wobei die Seele (18) einen Anschlag (20) mit einer Dicke h, die größer als 1 ist, sowie eine Rippe (22), die im Bereich der Dichtungsbarriere (16) vorgesehen ist, umfasst, wobei die Dichtungsbarriere (16) von einem Element (24) aus einem flexiblen Material, insbesondere Elastomer, gebildet ist, das mindestens im Bereich des Hohlraums der Rippe (22) angeordnet ist, wobei das Element in Bezug zur ersten Anschlagebene (26), die durch eine erste Stützfläche des Anschlags (20) definiert ist, vorspringt, wobei der vorspringende Teil der Rippe (22) in Bezug zur zweiten Anschlagebene (28), die durch die zweite Stützfläche des Anschlags (20) definiert ist, vorspringt, **dadurch gekennzeichnet, dass** die erste Anschlagebene (26) in Bezug zur Oberfläche der Seele (18), in deren Bereich der Hohlraum der Rippe (22) ausgespart ist, vorspringt.

2. Dichtungsanordnung nach Anspruch 1, **dadurch gekennzeichnet, dass** Dichtungsbarrieren (16) auf jeder der Seiten der Dichtung angeordnet sind, wobei die vorspringenden Teile der Rippen entgegengesetzt ausgerichtet sind.

3. Dichtungsanordnung nach Anspruch 1 oder 2, **dadurch gekennzeichnet, dass** der Höhenunterschied (a) zwischen dem vorspringenden Teil des Elements aus flexiblem Material und der ersten Anschlagebene (26) größer oder gleich 20% der Höhe h des Anschlags (20) ist.

4. Dichtungsanordnung nach einem der Ansprüche 1 bis 3, **dadurch gekennzeichnet, dass** der Höhenunterschied (b) zwischen dem vorspringenden Teil der Rippe und der zweiten Anschlagebene (28) ungefähr 10 bis 50 % der Höhe der Rippe ist.
